# FASCICULE DE BREVET EUROPEEN

(11) **EP 3 671 166 B1**
(45) Date de publication et mention de la délivrance du brevet: **14.07.2021**
(21) Numéro de dépôt: 19216138.8
(22) Date de dépôt: 13.12.2019
(51) Int. Cl.: F01D 17/08, F02K 1/64, G01L 23/24, G01L 23/26, G01M 15/14, G01L 19/14

(54) **OUTIL DE MESURE DE PRESSION COMPORTANT UN FOURREAU POUR SA MISE EN PLACE DANS UNE VEINE D'UN MOTEUR D AÉRONEF**
DRUCKMESSINSTRUMENT, DAS EINE HÜLLE ZUM EINFÜHREN IN EINE LEITUNG EINES LUFTFAHRZEUGMOTORS UMFASST
TOOL FOR MEASURING PRESSURE COMPRISING A SHEATH FOR INSTALLATION IN A VEIN OF AN AIRCRAFT ENGINE

(30) Priorité: 17.12.2018 FR 1873077
(43) Date de publication de la demande: 24.06.2020
(73) Titulaire: AIRBUS OPERATIONS, 31060 Toulouse Cedex 9 (FR)
(72) Inventeur: CATURLA, Jean-Pascal, 31770 COLOMIERS (FR); DUPE, Nicolas, 31700 CORNEBARRIEU (FR); SORNIQUE, Olivier, 32600 LIAS (FR)
(74) Mandataire: Cabinet Le Guen Maillet

(56) Documents cités:
- WO-A1-2017/187108
- FR-A1- 2 929 998
- FR-A1- 3 043 775
- FR-A1- 3 066 779
- US-A1- 2014 037 430

## Description

### DOMAINE TECHNIQUE

La présente invention concerne un outil de mesure de pression qui comporte un fourreau pour permettre sa mise en place sur une bielle traversant une veine d'un moteur telle qu'une veine secondaire d'un turboréacteur double flux d'un aéronef, ainsi qu'un moteur d'aéronef comportant une veine et au moins un tel outil de mesure de pression, et un aéronef comportant au moins un tel moteur.

### ETAT DE LA TECHNIQUE ANTERIEURE

Lorsqu'un turboréacteur double flux de l'état de la technique doit être testé, il est nécessaire de mesurer la pression à l'intérieur, et en particulier à l'intérieur de la veine secondaire de ce turboréacteur.

Pour cela, il est connu de fixer des sondes de pression dans la veine secondaire. De telles sondes sont en métal et sont fixées par des éléments de visserie qui modifient de manière permanente les parois de la veine secondaire.

De telles sondes comportent également des tubes pneumatiques dont une extrémité est plongée dans la veine secondaire et dont l'autre extrémité est reliée à un capteur de pression qui est disposé à distance sur la nacelle ou dans l'aéronef.

Du fait de l'encombrement des tubes pneumatiques dans la veine secondaire, le nombre de ces tubes est limité, ce qui limite d'autant le nombre de points de mesure. Les documents FR3043775, FR3066779 ou WO2017/187108 divulguent d'autres exemples d'outils de mesure de pression prévus pour être fixés dans une veine d'un moteur d'un aéronef.

### EXPOSE DE L'INVENTION

Un objet de la présente invention est de proposer un outil de mesure de pression qui comporte un fourreau pour permettre sa mise en place sur une bielle qui est en travers d'une veine d'un moteur d'un aéronef et ainsi permettre un plus grand nombre de points de mesure sans dégrader les parois de la veine.

A cet effet, est proposé un outil de mesure de pression prévu pour être fixé à une bielle disposée en travers d'une veine d'un moteur d'un aéronef, ledit outil comportant :
- un fourreau constitué de deux parois entre lesquelles est délimité un logement prévu pour recevoir la bielle, où le logement communique avec l'extérieur par une ouverture qui s'étend sur la longueur du fourreau entre les deux parois, où l'ouverture est plus étroite que l'épaisseur de la bielle, où le fourreau présente une travée qui s'étend sur la longueur du fourreau et qui présente une pluralité de cavités répartie sur la longueur du fourreau,
- pour chaque cavité, une prise d'air comportant un passage qui débouche par une extrémité dans la cavité de la travée et par une extrémité dans la veine,
- un circuit imprimé qui court le long de la travée,
- pour chaque passage, un capteur de pression disposé dans la cavité correspondant audit passage et en regard dudit passage et implanté sur le circuit imprimé, et
- au moins une unité de traitement et/ou d'enregistrement des données transmises par les capteurs de pression qui est électriquement connectée au bus.

Un tel outil peut donc être mis facilement en place et permet un grand nombre de mesure dans la veine secondaire.

Avantageusement, le fourreau présente une section aérodynamique.

Avantageusement, le fourreau présente un bord d'attaque et un bord de fuite lorsqu'il est en place dans la veine secondaire, et l'ouverture est disposée au bord de fuite.

Avantageusement, chaque passage débouche dans la veine secondaire en amont du bord d'attaque du fourreau.

Avantageusement, l'outil de mesure de pression comporte une membrane respirante entre l'extrémité de chaque passage et la cavité correspondante.

Avantageusement, la travée débouche à l'extérieur par une fenêtre au niveau de l'une des extrémités du fourreau et depuis laquelle le circuit imprimé est accessible.

L'invention propose également un moteur d'un aéronef, ledit moteur comportant une veine secondaire, au moins une porte d'inversion mobile entre une position escamotée dans laquelle la porte d'inversion n'est pas en travers de la veine secondaire et une position déployée dans laquelle la porte d'inversion est en travers de la veine secondaire, pour chaque porte d'inversion, une bielle fixée articulée entre la porte d'inversion et une motorisation, où en position escamotée, la bielle est en travers de la veine secondaire, et pour au moins une bielle, un outil de mesure de pression selon l'une des variantes précédentes où ladite bielle est logée dans le logement.

Avantageusement, la bielle comporte des moyens de positionnement empêchant le déplacement du fourreau le long de la bielle.

Avantageusement, les moyens de positionnement sont une augmentation de l'épaisseur de la bielle.

L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en coupe de côté d'un turboréacteur double flux selon l'invention,
[Fig. 3] est une vue de côté d'une bielle équipée d'un outil de mesure de pression selon l'invention,
[Fig. 4] est une vue en coupe selon la ligne IV-IV de la Fig. 3,
[Fig. 5] est une représentation d'une implantation comportant plusieurs outils de mesure de pression en réseau,
[Fig. 6] est une vue en coupe selon la ligne VI-VI de la Fig. 4, et
[Fig. 7] est une vue en perspective d'un composant de l'outil de mesure selon l'invention.

### EXPOSE DETAILLE DE MODES DE REALISATION

Dans la description qui suit, les termes relatifs à une position sont pris en référence au sens d'avancement d'un aéronef.

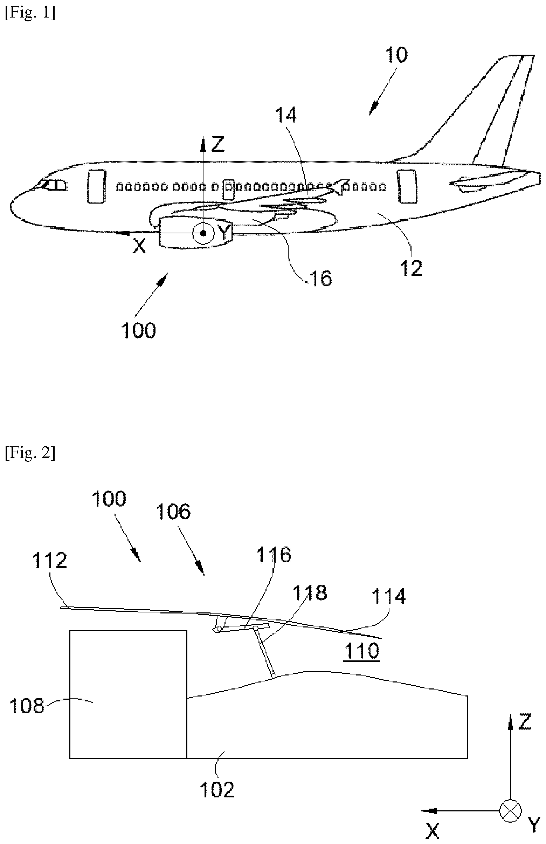

La Fig. 1 montre un aéronef 10 qui comporte un fuselage 12 de chaque côté duquel est fixée une aile 14 qui porte un moteur 100 et un mât 16 qui assure la fixation du moteur 100 sous l'aile 14. Dans la description qui suit, l'invention est plus particulièrement décrite dans le cadre d'un turboréacteur double flux et d'une veine secondaire d'un tel turboréacteur double flux mais elle peut s'appliquer à tout moteur comportant une veine dans laquelle la pression d'un flux d'air doit être mesurée.

Dans la description qui suit, et par convention, on appelle X l'axe longitudinal du turboréacteur double flux 100 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois axes X, Y et Z étant orthogonaux entre eux.

La Fig. 2 montre un exemple d'un turboréacteur double flux 100 dans lequel l'invention est mise en œuvre, mais il est possible de la mettre en œuvre dans un autre type de turboréacteur double flux.

Le turboréacteur double flux 100 comporte une soufflante 108, une motorisation 102 formant un noyau et une nacelle 106 disposée autour de la motorisation 102. La motorisation 102 est disposée en aval de la soufflante 108.

Une veine secondaire 110 est délimitée entre la motorisation 102 et la nacelle 106.

L'air qui pénètre par la soufflante 108 est divisé en un flux primaire qui traverse la motorisation 102 et un flux secondaire qui traverse la veine secondaire 110.

La nacelle 106 comporte autour de la soufflante 108, un carter de soufflante 112 qui est fixe et des capots mobiles 114 qui sont à l'arrière du carter de soufflante 112 et où chacun est mobile en translation selon une direction de translation globalement parallèle à l'axe longitudinal X du turboréacteur double flux 100.

Chaque capot mobile 114 est mobile en translation par rapport à la motorisation 102 entre une position avancée et une position reculée. En position avancée, les capots mobiles 114 sont accolés à l'arrière du carter de soufflante 112 et en position reculée, les capots mobiles 114 sont reculés par rapport au carter de soufflante 112 et à distance du carter de soufflante 112 pour ouvrir une fenêtre entre la veine secondaire 110 et l'extérieur de la nacelle 106. La fenêtre est délimitée à l'avant par le carter de soufflante 112 et à l'arrière par les capots mobiles 114.

Le déplacement de chaque capot mobile 114 est assuré par tous moyens appropriés comme des glissières, des vérins, ...

Le turboréacteur double flux 100 comporte également un système d'inversion de poussée qui comporte au moins une porte d'inversion 116.

Ici, chaque porte d'inversion 116 est montée mobile en rotation sur le capot mobile 114 autour d'un axe globalement perpendiculaire à l'axe longitudinal X.

Chaque porte d'inversion 116 est mobile entre une position escamotée et une position déployée. En position escamotée, la porte d'inversion 116 n'est pas en travers de la veine secondaire 110 et ne fait donc pas obstacle au passage du flux secondaire d'air dans la veine secondaire 110. En position déployée, la porte d'inversion 116 est en travers de la veine secondaire 110 de manière à dévier le flux d'air vers la fenêtre qui s'ouvre entre la veine secondaire 110 et l'extérieur de la nacelle 106.

Pour chaque porte d'inversion 116, le système d'inversion comporte également une bielle 118 qui déplace la porte d'inversion 116 de la position escamotée à la position déployée lorsque le capot mobile 114 passe de la position avancée à la position reculée. La bielle 118 est fixée articulée entre la porte d'inversion 116 et la motorisation 102.

Lorsque le capot mobile 114 se déplace vers la position reculée, la partie de la porte d'inversion 116 qui est fixée audit capot mobile 114 recule également tandis que la partie de la porte d'inversion 116 qui est fixée à la bielle 118 se trouve retenue et pivote pour venir contre la motorisation 102.

Ainsi, en position escamotée, chaque bielle 118 est en travers de la veine secondaire 110 et en position déployée, chaque bielle 118 se trouve pratiquement plaquée contre la motorisation 102.

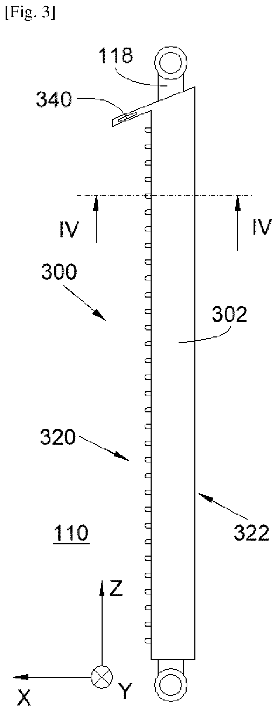

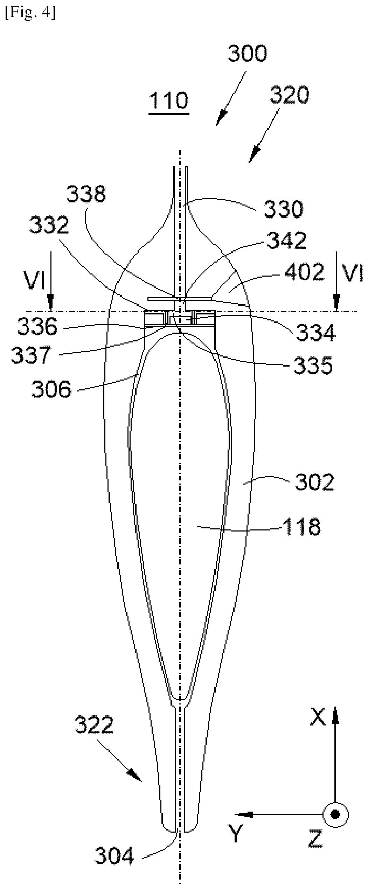

La Fig. 3 montre la bielle 118 avec un point d'articulation à chaque extrémité et recouvert d'un outil de mesure de pression 300 selon l'invention et la Fig. 4 montre la bielle 118 et l'outil 300 en coupe. L'outil 300 est plus particulièrement conçu pour mesurer les pressions lorsque la porte d'inversion 116 est en position escamotée.

La bielle 118 présente une section aérodynamique autour de laquelle s'écoule l'air de la veine secondaire 110.

L'outil 300 comporte un fourreau 302 constitué de deux parois entre lesquelles est délimité un logement 306 dans lequel la bielle 118 est reçue. Le logement 306 communique avec l'extérieur du fourreau 302 par une ouverture 304 qui s'étend sur la longueur du fourreau 302 entre les deux parois.

Chaque paroi forme ainsi une branche d'une pince entre laquelle se positionne la bielle 118.

L'ouverture 304 entre les deux parois est plus étroite que l'épaisseur de la bielle 118 et l'introduction de la bielle 118 nécessite donc un écartement élastique des parois et un resserrement lorsque la bielle 118 est en place dans le logement 306. Cette déformation élastique du fourreau 302 assure un maintien de l'outil 300 sans qu'il soit nécessaire de prévoir des éléments complémentaires.

Si nécessaire, il est possible de coller les deux bords de l'ouverture 304 tout en autorisant le décollage ultérieur pour un retrait du fourreau 302.

Comme le fourreau 302 se positionne autour de la bielle 118, sa mise en place n'implique aucune action sur les autres parties du turboréacteur 100 et son retrait s'effectue simplement en ressortant la bielle 118 du fourreau 302, constituant ainsi un système non intrusif qui ne perturbe ni les mesures, ni l'écoulement d'air.

Pour limiter l'impact du fourreau 302 sur l'écoulement d'air, le fourreau 302 présente une section aérodynamique qui est ici biconvexe.

Comme le fourreau 302 s'étend de part et d'autre de la bielle 118, le flux d'air qui l'entoure entraîne l'apparition d'une pression autour du fourreau 302 renforçant ainsi son maintien.

En place sur la bielle 118 dans la veine secondaire 110, le fourreau 302 présente un bord d'attaque 320 orienté vers l'avant et un bord de fuite 322 orienté vers l'arrière par rapport à l'écoulement de l'air dans la veine secondaire 110.

Pour limiter l'impact de l'ouverture 304 sur l'écoulement, elle est disposée au bord de fuite 322.

Le fourreau 302 présente également une travée 332 qui est réalisée à l'intérieur du fourreau 302, qui s'étend sur la longueur du fourreau 302 et qui est ici intégrée au logement 306.

Au niveau du bord d'attaque 320, l'outil 300 comporte une pluralité de prises d'air, chacune comportant un passage 330.

Les prises d'air sont réparties sur la longueur du fourreau 302 et les passages 330 sont orientés globalement parallèlement à l'écoulement de l'air dans la veine secondaire 110.

Pour chaque passage 330, la travée 332 présente un orifice 342 qui prolonge le passage 330.

Chaque passage 330 débouche ainsi par une extrémité dans la travée 332 par l'intermédiaire ici de l'orifice 342, et chaque passage 330 débouche par une autre extrémité dans la veine secondaire 110 en amont du bord d'attaque 320 du fourreau 302. Chaque orifice 342 permet le passage du flux d'air provenant de chaque passage 330.

Pour chaque passage 330, l'outil 300 comporte un capteur de pression 334, par exemple du type systèmes microélectromécaniques (« Microelectromechanical systems / MEMS » en langage Anglo-Saxon), qui est disposé dans la travée 332 en regard du passage 330 afin de mesurer la pression qui s'exerce dans le passage 330 et donc dans la veine secondaire 110 au niveau de ce passage 330. Chaque capteur de pression 334 est implanté sur un circuit imprimé 336.

Pour chaque capteur de pression 334 et donc chaque passage 330, la travée 332 présente une cavité 335 en communication fluidique avec le passage 330 et qui est fluidiquement isolée des autres cavités 335, et dans laquelle est logé le capteur de pression 334. Chaque cavité 335 est ici délimitée par des parois de soutien 337 qui entourent le capteur de pression 334. Cette cavité 335 évite que les mesures de pression d'un capteur de pression 334 soient perturbées par les autres passages 330.

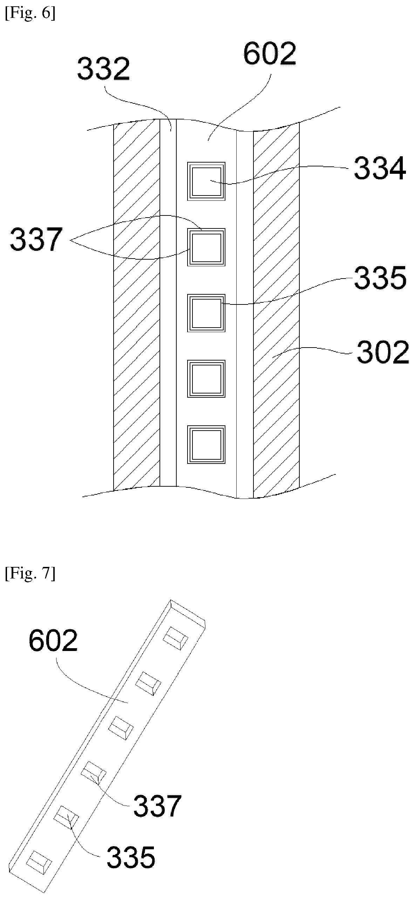

La Fig. 6 montre les parois de soutien 337 qui délimitent chaque cavité 335 sur ces quatre côtés et avec le capteur de pression 334 disposé entre les parois de soutien 337.

La Fig. 7 montre un mode de réalisation particulier, où toutes les parois de soutien 337 sont solidaires d'une base 602 qui court le long de la travée 332 et qui est percée au niveau de chaque cavité 335.

La base 602 et les parois de soutien 337 peuvent être réalisées ensemble par moulage et peuvent être réalisée par exemple dans un élastomère du type joint silicone. Un tel joint permet ainsi d'assurer l'isolation des cavités 335 en remplissant la travée 332 autour du capteur de pression 334 et, en particulier, en étant en appui contre le circuit imprimé 336.

Ainsi, d'une manière générale, le fourreau 302 présente la travée 332 qui s'étend sur la longueur du fourreau 302 et qui présente une pluralité de cavités 335 répartie sur la longueur du fourreau 302. En outre, pour chaque cavité 335, il y a une prise d'air comportant un passage 330 qui débouche par une extrémité dans la cavité 335 de la travée 332 et par une extrémité dans la veine 110 et pour chaque passage 330, un capteur de pression 334 disposé dans la cavité 335 correspondant audit passage 330 et en regard dudit passage 330 et implanté sur le circuit imprimé 336.

Les capteurs de pression 334 sont implantés sur un circuit imprimé 336 qui court dans la travée 332 le long du fourreau 302.

Le circuit imprimé 336 comporte en particulier un bus de données et une alimentation.

Selon un mode de réalisation particulier, le circuit imprimé 336 est souple.

Dans le mode de réalisation de l'invention présenté sur la Fig. 4, les parois de soutien 337 des cavités 335 s'étendent jusqu'au circuit imprimé 336.

L'outil 300 comporte une unité de traitement et/ou d'enregistrement des données transmises par les capteurs de pression 334 directement implantés sur le circuit imprimé 336.

D'une manière générale, l'unité de traitement et/ou d'enregistrement des données est électriquement connectée au circuit imprimé 336.

Dans le mode de réalisation de l'invention présenté ici, la travée 332 débouche à l'extérieur par une fenêtre 340 au niveau de l'une des extrémités du fourreau 302 et depuis laquelle le circuit imprimé 336 est accessible.

Pour des raisons d'étanchéité, l'autre extrémité de la travée 332 est fermée. En particulier, l'extrémité qui est proche de la motorisation 102 est fermée et l'extrémité qui est orientée vers la porte d'inversion 116 est ouverte.

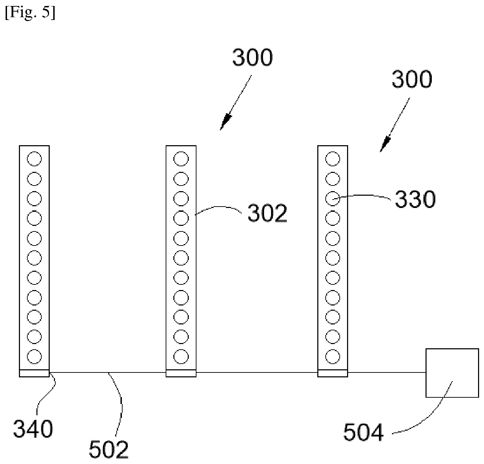

La Fig. 5 montre un assemblage de plusieurs outils de mesure de pression 300 qui sont mis par exemple en place dans une même veine secondaire 110 sur différentes bielles 118.

Les circuits imprimés 336 des différents outils de mesure de pression 300 sont connectés les uns aux autres par des câbles 502 par exemple des câbles plats. Un câble peut se prolonger à l'extérieur du moteur 100 jusqu'à un système de traitement et/ou d'affichage 504 disposé dans la cabine pour permettre la récupération des données et l'alimentation des circuits imprimés 336.

L'unité de traitement et/ou d'enregistrement des données peut être remplacée par un système de traitement et/ou d'affichage et se trouver ainsi hors du fourreau 302.

Dans le mode de réalisation de l'invention présenté à la Fig. 3, le fourreau 302 s'étend sur toute la longueur de la bielle 118, mais il est possible de limiter la longueur du fourreau 302 à une partie de la bielle 118.

Pour maintenir le fourreau en position, il est alors possible de disposer des moyens de positionnement le long de la bielle 118 empêchant le déplacement du fourreau 302 le long de la bielle 118. Ces moyens de positionnement sont par exemple une augmentation de l'épaisseur de la bielle 118, empêchant ainsi le déplacement du fourreau 302.

Dans le mode de réalisation de l'invention présenté à la Fig. 4, l'outil 300 comporte en amont de chaque capteur de pression 334 en travers du passage 330 correspondant audit capteur de pression 334, une membrane 338 respirante qui laisse passer l'air mais pas les liquides et les corps solides. La membrane 338 est ainsi disposée entre la travée 332, plus particulièrement l'orifice 342, et l'extrémité de chaque passage 330.

Dans le mode de réalisation de l'invention présenté sur la Fig. 4, la membrane 338 est disposée dans une fente et le fourreau 302 présente un tiroir 402 qui permet de dégager la fente et libérer l'accès à la fente depuis l'extérieur pour permettre l'introduction de la membrane 338.

Bien sûr d'autres modes de réalisation sont possibles pour permettre la mise en place de la membrane 338 dans la fente. Par exemple, il est possible de retirer la partie du fourreau 302 qui est à l'arrière de la fente, c'est-à-dire la partie comportant les parois de soutien 337.

Le matériau du fourreau 302 doit être suffisamment souple pour autoriser l'introduction et le retrait de la bielle 118 sans se déformer et suffisamment rigide pour serrer la bielle 118 lorsqu'elle est dans le logement 306. Un exemple de matériau est le polyamide PA12.

Le nombre de capteurs de pression 334 peut varier, mais selon un exemple de réalisation, il est possible de mettre un capteur de pression 334 par exemple tous les 2 cm.

Chaque capteur de pression 334 peut également être équipé de moyens permettant une mesure de température permettant ainsi d'améliorer la compréhension du flux dans la veine secondaire 110.

Dans la disposition prévue sur les figures, les mesures de pression s'effectuent le long du bord d'attaque, mais il est également possible de réaliser des mesures de pression en dehors du bord d'attaque et de répartir ainsi les mesures sur la surface du fourreau 302.

## Revendications

1. Outil de mesure de pression (300) prévu pour être fixé à une bielle (118) disposée en travers d'une veine (110) d'un moteur (100) d'un aéronef (10), ledit outil (300) comportant :
- un fourreau (302) constitué de deux parois entre lesquelles est délimité un logement (306) prévu pour recevoir la bielle (118), où le logement (306) communique avec l'extérieur par une ouverture (304) qui s'étend sur la longueur du fourreau (302) entre les deux parois, où l'ouverture (304) est plus étroite que l'épaisseur de la bielle (118), où le fourreau (302) présente une travée (332) qui s'étend sur la longueur du fourreau (302) et qui présente une pluralité de cavités (335) répartie sur la longueur du fourreau (302),
- pour chaque cavité (335), une prise d'air comportant un passage (330) qui débouche par une extrémité dans la cavité (335) de la travée (332) et par une extrémité dans la veine (110),
- un circuit imprimé (336) qui court le long de la travée (332),
- pour chaque passage (330), un capteur de pression (334) disposé dans la cavité (335) correspondant audit passage (330) et en regard dudit passage (330) et implanté sur le circuit imprimé (336), et
- au moins une unité de traitement et/ou d'enregistrement des données transmises par les capteurs de pression (334) qui est électriquement connectée au circuit imprimé (336).

2. Outil de mesure de pression (300) selon la revendication 1, **caractérisé en ce que** le fourreau (302) présente une section aérodynamique.

3. Outil de mesure de pression (300) selon l'une des revendications 1 ou 2, **caractérisé en ce que** le fourreau (302) présente un bord d'attaque (320) et un bord de fuite (322) lorsqu'il est en place dans la veine secondaire (110), et **en ce que** l'ouverture (304) est disposée au bord de fuite (322).

4. Outil de mesure de pression (300) selon la revendication 3, **caractérisé en ce que** chaque passage (330) débouche dans la veine secondaire (110) en amont du bord d'attaque (320) du fourreau (302).

5. Outil de mesure de pression (300) selon l'une des revendications 1 à 4, **caractérisé en ce qu'**il comporte une membrane (338) respirante entre l'extrémité de chaque passage (330) et la cavité (335) correspondante.

6. Outil de mesure de pression (300) selon l'une des revendications 1 à 5, **caractérisé en ce que** la travée (332) débouche à l'extérieur par une fenêtre (340) au niveau de l'une des extrémités du fourreau (302) et depuis laquelle le circuit imprimé (336) est accessible.

7. Moteur (100) d'un aéronef (10), ledit moteur (100) comportant une veine secondaire (110), au moins une porte d'inversion (116) mobile entre une position escamotée dans laquelle la porte d'inversion (116) n'est pas en travers de la veine secondaire (110) et une position déployée dans laquelle la porte d'inversion (116) est en travers de la veine secondaire (110), pour chaque porte d'inversion (116), une bielle (118) fixée articulée entre la porte d'inversion (116) et une motorisation (102), où en position escamotée, la bielle (118) est en travers de la veine secondaire (110), et pour au moins une bielle (118), un outil de mesure de pression (300) selon l'une des revendications précédentes où ladite bielle (118) est logée dans le logement (306).

8. Moteur (100) selon la revendication 7, **caractérisé en ce que** la bielle (118) comporte des moyens de positionnement empêchant le déplacement du fourreau (302) le long de la bielle (118).

9. Moteur (100) selon la revendication 8, **caractérisé en ce que** les moyens de positionnement sont une augmentation de l'épaisseur de la bielle (118).

10. Aéronef (10) comportant au moins un turboréacteur double flux (100) selon l'une des revendications 7 à 9.

## Patentansprüche

1. Druckmessinstrument (300), das dazu vorgesehen ist, an einer Pleuelstange (118) befestigt zu sein, die quer zu einem Strom (110) eines Triebwerks (100) eines Luftfahrzeugs (10) angeordnet ist, wobei das Instrument (300) Folgendes aufweist:
- eine Hülse (302), die aus zwei Wänden gebildet ist, zwischen denen eine Aufnahme (306) begrenzt ist, die dazu vorgesehen ist, die Pleuelstange (118) aufzunehmen, wobei die Aufnahme (306) durch eine Öffnung (304), die sich über die Länge der Hülse (302) zwischen den beiden Wänden erstreckt, mit dem Äußeren in Verbindung steht, wobei die Öffnung (304) schmaler als die Dicke der Pleuelstange (118) ist, wobei die Hülse (302) ein Joch (332) aufweist, das sich über die Länge der Hülse (302) erstreckt und das mehrere über die Länge der Hülse (302) verteilte Hohlräume (335) aufweist,
- für jeden Hohlraum (335) einen Lufteinlass, der einen Durchgang (330) aufweist, der an einem Ende in den Hohlraum (335) des Jochs (332) und an einem Ende in den Strom (110) mündet,
- eine Leiterplatte (336), die entlang des Jochs (332) verläuft,
- für jeden Durchgang (330) einen Drucksensor (334), der in dem dem Durchgang (330) entsprechenden Hohlraum (335) angeordnet ist und dem Durchgang (330) gegenüberliegt und auf der Leiterplatte (336) implementiert ist, und
- zumindest eine Einheit zur Verarbeitung und/oder Aufzeichnung der von den Drucksensoren (334) übertragenen Daten, die elektrisch mit der Leiterplatte (336) verbunden ist.

2. Druckmessinstrument (300) nach Anspruch 1, **dadurch gekennzeichnet, dass** die Hülse (302) einen aerodynamischen Querschnitt aufweist.

3. Druckmessinstrument (300) nach einem der Ansprüche 1 oder 2, **dadurch gekennzeichnet, dass** die Hülse (302) eine Vorderkante (320) und eine Hinterkante (322) aufweist, wenn sie im Sekundärstrom (110) angeordnet ist, und dass die Öffnung (304) an der Hinterkante (322) angeordnet ist.

4. Druckmessinstrument (300) nach Anspruch 3, **dadurch gekennzeichnet, dass** jeder Durchgang (330) stromaufwärts der Vorderkante (320) der Hülse (302) in den Sekundärstrom (110) mündet.

5. Druckmessinstrument (300) nach einem der Ansprüche 1 bis 4, **dadurch gekennzeichnet, dass** er zwischen dem Ende jedes Durchgangs (330) und dem entsprechenden Hohlraum (335) eine atmungsaktive Membran (338) aufweist.

6. Druckmessinstrument (300) nach einem der Ansprüche 1 bis 5, **dadurch gekennzeichnet, dass** das Joch (332) durch ein Fenster (340) an einem der Enden der Hülse (302), von dem aus die Leiterplatte (336) zugänglich ist, nach außen mündet.

7. Triebwerk (100) eines Luftfahrzeugs (10), wobei das Triebwerk (100) einen Sekundärstrom (110), zumindest eine Umkehrtür (116), die zwischen einer eingefahrenen Position, in der die Umkehrtür (116) nicht quer zum Sekundärstrom (110) verläuft, und einer ausgefahrenen Position, in der die Umkehrtür (116) quer zum Sekundärstrom (110) verläuft, bewegbar ist, für jede Umkehrtür (116) eine Pleuelstange (118), die gelenkig zwischen der Umkehrtür (116) und einer Motorisierung (102) befestigt ist, wobei die Pleuelstange (118) in der eingefahrenen Position quer zum Sekundärstrom (110) verläuft, und für zumindest eine Pleuelstange (118) ein Druckmessinstrument (300) nach einem der vorangehenden Ansprüche aufweist, wobei die Pleuelstange (118) in der Aufnahme (306) angeordnet ist.

8. Triebwerk (100) nach Anspruch 7, **dadurch gekennzeichnet, dass** die Pleuelstange (118) Positionierungsmittel aufweist, die eine Bewegung der Hülse (302) entlang der Pleuelstange (118) verhindern.

9. Triebwerk (100) nach Anspruch 8, **dadurch gekennzeichnet, dass** die Positionierungsmittel eine Erhöhung der Dicke der Pleuelstange (118) sind.

10. Luftfahrzeug (10), umfassend zumindest ein Zweistrom-Turbinenstrahltriebwerk (100) nach einem der Ansprüche 7 bis 9.

## Claims

1. Pressure measurement tool (300) provided to be fixed to a connecting rod (118) disposed across an airstream (110) of an engine (100) of an aircraft (10), said tool (300) comprising:
- a sheath (302) composed of two walls between which there is delimited a housing (306) designed to receive the connecting rod (118), in which the housing (306) communicates with the outside through an aperture (304) which extends over the length of the sheath (302) between the two walls, in which the aperture (304) is narrower than the thickness of the connecting rod (118), in which the sheath (302) has a span (332) which extends over the length of the sheath (302) and which has a plurality of cavities (335) distributed over the length of the sheath (302),
- for each cavity (335), an air intake comprising a passage (330) which emerges by one end in the cavity (335) of the span (332) and by one end in the airstream (110),
- a printed circuit (336) which runs along the span (332),
- for each passage (330) a pressure sensor (334) disposed in the cavity (335) corresponding to said passage (330) and opposite said passage (330) and installed on the printed circuit (336), and
- at least one processing and/or storage unit for the data transmitted by the pressure sensors (334) which is electrically connected to the printed circuit (336).

2. Pressure measurement tool (300) according to Claim 1, **characterized in that** the sheath (302) has an aerodynamic section.

3. Pressure measurement tool (300) according to either of Claims 1 and 2, **characterized in that** the sheath (302) has a leading edge (320) and a trailing edge (322) when it is placed in the bypass airstream (110), and **in that** the aperture (304) is disposed at the trailing edge (322).

4. Pressure measurement tool (300) according to Claim 3, **characterized in that** each passage (330) emerges in the bypass airstream (110) upstream of the leading edge (320) of the sheath (302).

5. Pressure measurement tool (300) according to one of Claims 1 to 4, **characterized in that** it comprises a breathing membrane (338) between the end of each passage (330) and the corresponding cavity (335).

6. Pressure measurement tool (300) according to one of Claims 1 to 5, **characterized in that** the span (332) emerges outside through a window (340) at one of the ends of the sheath (302) and from which the printed circuit (336) can be accessed.

7. Engine (100) of an aircraft (10), said engine (100) comprising a bypass airstream (110), at least one thrust-reversing door (116) that is movable between a retracted position in which the thrust-reversing door (116) is not across the bypass airstream (110) and an extended position in which the thrust-reversing door (116) is across the bypass airstream (110), for each thrust-reversing door (116), a connecting rod (118) fixed and articulated between the thrust-reversing door (116) and a motorization means (102), in which, in retracted position, the connecting rod (118) is across the bypass airstream (110), and, for at least one connecting rod (118), a pressure measurement tool (300) according to one of the preceding claims in which said connecting rod (118) is housed in the housing (306).

8. Engine (100) according to Claim 7, **characterized in that** the connecting rod (118) comprises positioning means preventing the displacement of the sheath (302) along the connecting rod (118).

9. Engine (100) according to Claim 8, **characterized in that** the positioning means are an increase in the thickness of the connecting rod (118).

10. Aircraft (10) comprising at least one turbofan engine (100) according to one of Claims 7 to 9.
